# EUROPEAN PATENT APPLICATION

(11) **EP 1 003 316 A2**
(43) Date of publication of application: **24.05.2000**
(21) Application number: 99440320.2
(22) Date of filing: 16.11.1999
(51) Int. Cl.: H04M 1/02, H04M 1/723

(54) **Filtered plug-socket assembly for telephone systems or the like**

(30) Priority: 20.11.1998 IT MI982515
(71) Applicant: ALCATEL, 75008 Paris (FR)
(72) Inventor: Fortini, Giuseppe, 24043 Carravaggio (Bergamo) (IT)
(74) Representative: Schmidt, Werner Karl, Dipl.-Phys.

(57) **Abstract**

A filtered plug-socket assembly (10), e.g. a three-pole one, is described for the simultaneous connection of several telephone apparatus, such as telephone sets, facsimile, modems, etc.. The assembly, in accordance with the invention, comprises a three-pole plug, a three-pole socket and at least an RJ or equivalent socket. In addition, a filter element and a bridging connection between two of the pins of the three-pole plug are provided for changing the configuration of an system from "master-slave" to "parallel". In the case where the system is already a parallel one, the use of the assembly in accordance with the invention does not result in any variation i.e. the various sockets remain in parallel configuration. The assembly according to the invention has small dimensions, is cheap and practical and avoids the intervention of high-cost skilled personnel for the modification of the system.

## Description

The present invention generally relates to telephone systems and in particular to a plug-socket assembly provided with a filter substantially designed to eliminate the "master-slave" characteristic of the existing telephone systems and to filter the received/transmitted signals.

As it is known, the fixed telephone systems for use in dwelling houses existing in many European and extra-European countries, are mostly of the master-slave type, namely with a main socket (master) and possibly further secondary sockets (slaves) downstream the main socket. In other words, when the main telephone set (the set connected to the main socket) is in off-hook condition, this automatically excludes those located downstream. Such a wiring prevents using services which utilize the same telephone system simultaneously with a telephone set, such as, for instance, the ADSL-LITE (simplified version of the known ADSL), just because an ADSL (Asymmetrical Digital Subscriber Loop) modem, being arranged downstream the telephone set in use, is cut off.

Therefore, it is apparent that it should be necessary to wire all the phones in parallel in order to avoid the above problem or, as an alternative, to use a "splitter" device. As a further alternative to achieve a parallel wiring, the existing master-slave system could be properly modified. It is apparent that such a modification should inevitably be carried out by a skilled technician in order to avoid any damage to the system and therefore it necessarily implies not negligible costs for the user. A further disadvantage is that, the user who decides to acquire an apparatus (e.g. a modem) and to connect it to a socket downstream the main one, shall await until the modification of the installation has been carried out and therefore the acquired apparatus cannot be used at once.

The main object of the present invention is to overcome the above drawbacks and to provide a filtered plug-socket assembly, preferably a three-pole one, that, when is simply plugged in some of (and preferably in all) the telephone sockets present in the system, inhibits the master-slave characteristic without the need for any intervention on the system itself.

The filtered plug-socket assembly in accordance with the present invention includes a filter for the phone and further comprises one or more "RJ" (or the like) sockets for connecting a modem, e.g. an ADSL modem.

These and further objects are fully achieved by the filtered plug-socket assembly in accordance with the present invention having the features set forth in the independent claim 1 which is an integral part of the present description. Further advantageous features of the present invention are set forth in the dependent claims, also being an integral part of the present description.

Among the advantageous characteristics of the plug-socket assembly in accordance with the present invention is the fact that should it be inserted in the socket of a system which has been already modified (namely a system having the sockets already arranged in parallel), it would not affect such a connection, still ensuring at the same time the filtering feature and the possibility of using one or more RJ-type sockets (or plugs), or the like.

The invention will certainly be clear from the following detailed description, given by way of a pure exemplifying and non limiting example, referring to the drawings in which the various figures show:
- Fig. 1 shows, schematically and substantially in cross-section, the plug-socket assembly according to the present invention while it is being plugged in a wall socket and in which assembly the plug of a telephone set is being inserted; and
- Fig. 2 shows, in a very schematic representation, a conventional (fixed) home system.

Obviously, identical reference numerals will be used throughout the figures to indicate identical or functionally equivalent parts.

The expression "internal telephone system" is used herein to mean a plurality of connections, and possibly sockets, connecting the telephone sets to the network termination. The internal telephone systems are, in turn, subdivided into several categories, in particular fixed connection systems and socket systems (which the present invention is related to).

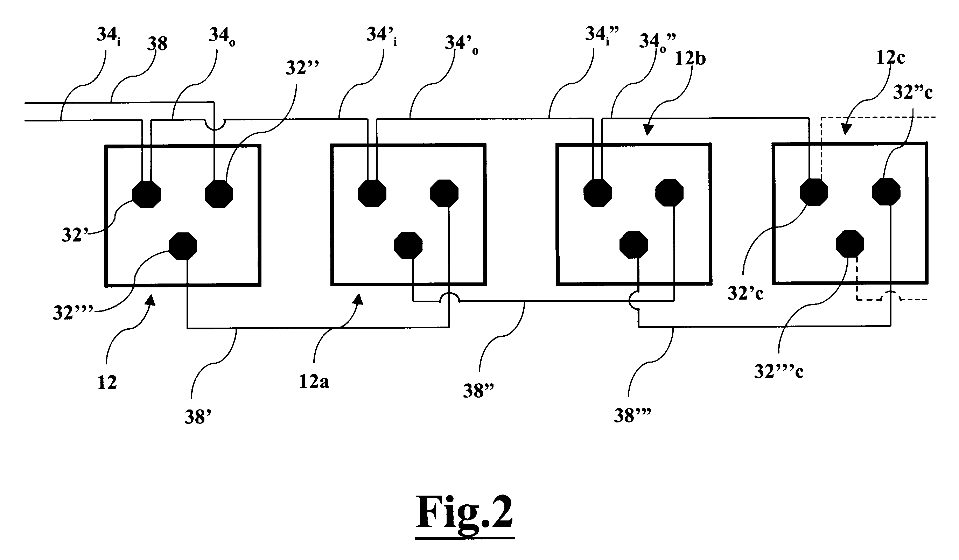

A socket system (see Fig. 2) typically consists in some telephone sockets (12, 12a, 12b, 12c, ...) connected with each other through the so-called telephone plait (twisted-pair) that allows the telephone sets to be connected to the network termination 34 by means of a cord 18 provided with a suitable plug 14. The socket systems are firstly so constructed as to have several sockets and only one telephone set or, more in general, to have a number of sockets higher than the number of telephone sets (this function allows for instance the wiring of apartments under construction with several sockets, leaving to the future tenants a certain flexibility about the final location of the telephone sets).

It is advisable to point out right now that, although in the following description and in the appended claims reference is generally made to three-pole sockets and three-pole plugs, such a definition should not be intended in a limiting sense. In other words, a three-pole socket (or three-pole plug) here refers to both a three-pole socket (or three-pole plug) and to a four-pole, five-pole, and so on, socket (or plug). Likewise, "RJ socket" (or RJ plug) will designate also any similar type of sockets (or plugs) which is known to a person skilled in the art.

In practice, the internal socket telephone systems are comprised of the following parts:
a) wiring carried out by using two conductors (telephone twisted pair);
b) wall sockets (outlets); in the case of three-pole sockets, these are provided with an auxiliary contact providing continuity downstream thereof when the plug is not inserted (when the plug is inserted, the connected telephone set provides the continuity connection);
c) at least one telephone set provided with a plug, for instance a three-pole one; such an apparatus provides the downstream continuity when it is hooked on; when it is hooked off it must open and possibly short-circuit downstream ("cold" short-circuit); and
d) an ancillary ringer that allows an incoming call to be heard even when all the telephone sets are out of the sockets. Such an ancillary ringer being further useful during the loop test carried out by the central office, still in the event of all telephone sets being disconnected (lack of it would not allow the central office to distinguish between a twisted-pair fault situation and disconnected or out-of-order telephone set situation).

The three-pole sockets could also house devices protecting them against overvoltage (arresters and/or PTCs).

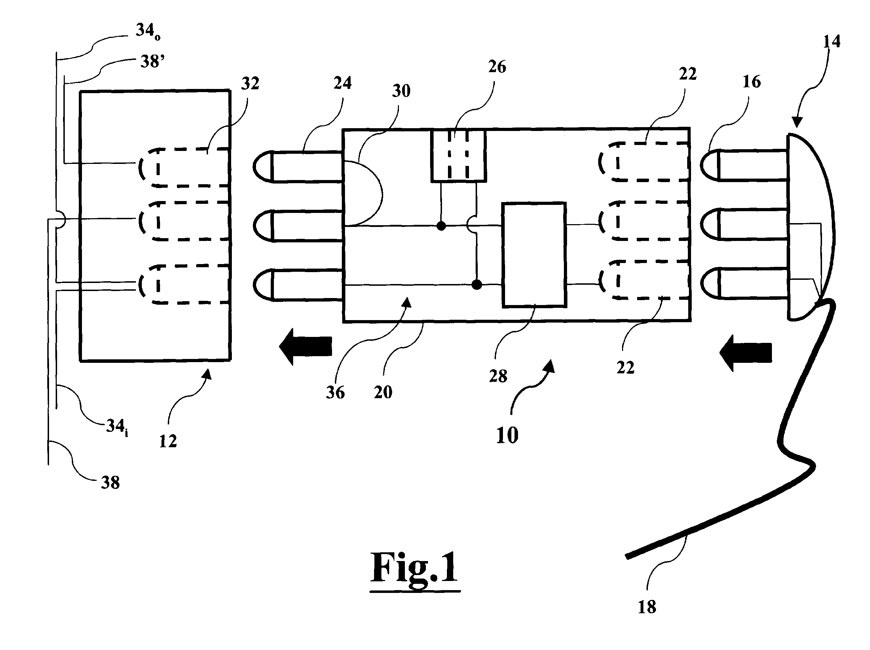

Referring now to Fig. 1, the plug-socket assembly 10 according to the present invention comprises a case 20 of any shape and made of any material, profitably a plastic material. Provided at one end (hereinafter referred to as "plug side") of the assembly is a plug (a three-pole plug in the shown embodiment) having projecting pins 24 designed to be inserted in corresponding recesses 32 of a matching wall socket 12 (a three-pole one in the instance). Provided at the side (likewise referred to as "socket side") opposite to the plug side, is a socket (for instance, but not necessarily, a three-pole one) having recesses 22 in which the projecting pins 16 of a plug 14 of a telephone apparatus (not shown since it is not directly concerned with the invention) leading to the cord 18 could be inserted. The telephone apparatus can indifferently be a phone, a telephone answering machine, a facsimile unit, etc..

Profitably, the assembly 10 according to the invention comprises, still referring to Fig. 1, one or more RJ (or functionally equivalent types) sockets 26, well known to a person skilled in the art. Such RJ sockets 26 allow the simultaneous connection of other equipments, typically ADSL modems (not shown).

Furthermore, housed inside the assembly 10, is a filtering element 28 which is connected (see connection 36) both to two pins 24 of the plug side and to two corresponding recesses 22 of the socket side. The type of filtering element is irrelevant to the invention and can be a band-pass, a low-pass, a high-pass filter or any combination thereof and it can also be simply formed by an inductor.

Continuing the description of the assembly in accordance with the present invention, it may be appreciated that the RJ socket 26 (which could be also a plug, accessible from the outside of the assembly 10) is connected downstream (from the socket side to the plug side) of the filter element by simply connecting its two respective wires to those joining the pins 24 of the plug side with the filtering element 28.

A further characteristic feature of the assembly in accordance with the present invention is the bridging connection 30 between the pin 24 of the plug side which enters the respective recess 32 of the wall socket leading to wire 38 connected to the downstream socket and the pin 24 entering the recess 32 of the wire 38' substantially coming from the central office. The function of this simple connection is to change the configuration of the system from "master-slave" to "parallel". In other words, in this way, if an equipment connected to a downstream socket is being used, for instance the one designed by 12b (which is located downstream of both the sockets 12 (which is the master in a "master-slave" system) and 12a), the communication cannot be interrupted for instance by raising the handset of the telephone set connected to the upstream socket (12). This feature is still more favourable if one considers that, as already mentioned previously, in the event that the telephone system has already been modified and therefore it is already of the "parallel" type, the plugging-in of the plug-socket assembly in accordance with the present invention would not change the configuration of the system (therefore, the various sockets would remain "in parallel").

For completeness of description, even if it should be apparent from the above description, in Fig. 2 the reference numeral 34ᵢ designates the incoming wire of the telephone twisted pair upstream of the master socket 12; reference numeral 34ₒ designates the wire going out of the master socket 12 which in turn becomes the incoming wire (34ᵢ') for the next downstream socket 12a, and so on. Generally, 38 is the common wire of the three-pole socket system: only for the sake of clearness it has been used 38 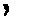 to indicate the connection between the master socket 12 and the first downstream socket 12a, 38 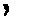 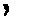 to indicate the connection between the latter and the next one 12b, etc.. In the event that the system contemplates four-pole sockets, also wire 38 could have a 38ᵢ (incoming) and a 38ₒ (outgoing).

Finally, the presence of the filtering element ensures substantially noiseless, and hence better quality, communications.

In order to avoid omissions or mistakes, it is advisable to install (i.e. merely to plug-in) an assembly in accordance with the present invention at any of the sockets 12 of the system.

It is apparent that many modifications, adaptations and replacement of parts by others which are functionally equivalent, may be made in the embodiment shown and described in detail above, without departing from the scope as defined by the following claims.

## Claims

1. Plug-socket assembly (10) for use in a telephone system or the like having at least one socket (12, 12a, 12b, 12c, ...) and a wire connection made by a telephone twisted pair (34, 38) comprising: a) plug means having pins (24) designed to be inserted in suitable recesses (32) of a socket (12); b) socket means having recesses (22) for receiving pins (16) of a plug (14) therein; c) RJ-type socket and/or plug means (26), or the like; and d) means (36) for connecting said RJ-type socket and/or plug means (26), at least two of the pins (24) of the plug means and at least two corresponding recesses (22) of the socket means, characterised in that it further comprises bridging connection means (30) between those pins (24) which plug-in those recesses (32) connected to the common wire (38) to provide or ensure the parallel connection in a telephone system having several sockets (12, 12a, 12b, ...).

2. Plug-socket assembly (10) according to claim 1, characterised in that it further comprises filter means (28) connected to said connection means (36).

3. Plug-socket assembly (10) according to claim 2, characterised in that said filter means (28) comprises any of a low-pass filter, a high-pass filter, a band-pass filter, or the like, or a combination thereof.

4. Plug-socket assembly (10) according to claim 1, 2, or 3, characterised in that said RJ-type socket and/or plug means (26) comprises at least one RJ socket (26) which is accessible from outside of the casing (20) of said assembly for the connection of any possible ancillary equipment.

5. Assembly (10) according to any of claims 1 to 4, characterised in that said plug means and said socket means are a three-pole plug and a three-pole socket, respectively.
